# EUROPÄISCHE PATENTSCHRIFT

(11) **EP 0 806 238 B1**
(45) Veröffentlichungstag und Bekanntmachung des Hinweises auf die Patenterteilung: **19.12.2001**
(21) Anmeldenummer: 97810259.8
(22) Anmeldetag: 25.04.1997
(51) Int. Cl.: B01F 15/04

(54) **Vorrichtung zum Fördern dosierter Mengen mindestens zweier fliessfähiger Komponenten einer reaktiven Masse**
Apparatus for supplying metered quantities of at least two flowable components of a reactive mass
Appareil pour fournir des quantités dosées d'au moins deux composants fluides d'une masse réactive

(30) Priorität: 09.05.1996 DE 19618591
(43) Veröffentlichungstag der Anmeldung: 12.11.1997
(73) Patentinhaber: MICAFIL AG, 8048 Zürich (CH)
(72) Erfinder: Gmeiner, Paul, 8966 Lieli (CH); Altemeier, Rolf, 79802 Dettighofen (DE)
(74) Vertreter: ABB Patent Attorneys

(56) Entgegenhaltungen:
- WO-A-88/04225
- WO-A-91/10615
- DE-A- 4 313 171
- FR-A- 2 390 375
- US-A- 3 072 462

## Beschreibung

### TECHNISCHES GEBIET

Bei der Erfindung wird ausgegangen von einer Vorrichtung zum Fördern dosierter Mengen mindestens zweier fliessfähiger Komponenten einer reaktiven Masse nach dem Oberbegriff von Patentanspruch 1.

### STAND DER TECHNIK

Die Erfindung nimmt dabei Bezug auf eine Vorrichtung zum Dosieren mindestens zweier fliessfähiger Reaktionskomponenten in eine Mischkammer gemäß dem einleitenden Teil des Anspruchs 1, wie sie in US 3 072 462 A beschrieben ist. Die beschriebene Vorrichtung weist zwei jeweils mit einer vertikal ausgerichten Membran versehene Dosierpumpen zum Fördern von abrasiven Füllstoff enthaltenden, fliessfähigen Komponenten in eine Mischvorrichtung auf. Um ein Brechen der Membran zu vermeiden, wird die Bewegung der Membran bei einem Komponente zur Mischvorrichtung befördernden Dosierhub durch einen mit Öffnungen für die strömende Komponente versehenen, schalenförmig ausgebildeten Membransitz begrenzt.

Weitere Vorrichtungen zum Fördern dosierter Mengen mindestens zweier fliessfähiger Komponenten einer reaktiven Masse sind aus WO 88/04225 und DE 43 13 171 A bekannt. Diese Vorrichtungen enthalten für jede Komponente jeweils mindestens einen Behälterraum mit einem flexiblen, beispielsweise als Faltenbalg oder als Membrane ausgebildeten Verdrängerelement. Das Verdrängerelement unterteilt den Behälterraum in einen Komponenten- und in einen Hydraulikraum. Vor dem Dosieren wird Komponente aus einem mit Vordruck beaufschlagten Vorratsbehälter über ein Absperrventil in den Komponentenraum des Druckbehälters geführt. Danach wird das Absperrventil zum Vorratsbehälter geschlossen. Während des nachfolgenden Dosierens wird das Verdrängerelement mit einem durch eine Steuer-Regeleinrichtung in seiner Grösse und Zeit regelbaren Hydraulikstrom beaufschlagt und werden so dosierte Mengen der Komponente in die Mischkammer geführt.

### DARSTELLUNG DER ERFINDUNG

Der Erfindung, wie sie in Patentanspruch 1 angegeben ist, liegt die Aufgabe zugrunde, eine Vorrichtung der eingangs genannten Art schaffen, bei der eine Sedimentation von in einer abrasiv wirkenden Komponente enthaltenen abrasiven Stoffen mit grosser Sicherheit vermieden und zugleich eine hohe Dosiergenauigkeit erreicht wird.

Bei der Vorrichtung nach der Erfindung wird durch Anlegen von Unterdruck an die das inkompressible Fluid aufnehmenden Teilräume der Druckbehälter erreicht, dass die Membranen nach dem Dosieren besonders schnell zurückgezogen werden können. Zugleich ist sichergestellt, dass die Befüllung des Druckgefässes mit der abrasiven Komponente selbst bei einem nur unter Unterdruck stehendem Vorratsbehälter für die abrasive Komponente gewährleistet ist. Darüber hinaus wird das Fluid durch den Unterdruck entgast. Hierdurch wird die Inkompressibilität des Fluids nicht durch gelöste Gase beeinträchtigt und bei einer Dosierung mit dem Fluid die Dosiergenauigkeit verbessert. Durch Anlegen von Überdruck an die Vorratsbehälter kann die Zuströmgeschwindigkeit der Komponenten noch zusätzlich gesteigert werden.

Wird das aus dem Druckbehälter austretende imkompressible Fluid in einen evakuierbaren Behälter geführt, in dem es beim Dosieren unter Druck gesetzt wird, so können Zuführpumpen zu den das inkompressible Fluid in die Druckbehälter führenden Pumpen entfallen. Zugleich können beim Zuführen des inkompressiblen Fluids keine Dosierfehler entstehen, da die Ansaugleitung der Pumpen immer mit inkompressiblem Fluid gefüllt sind.

Zugeich ist beim Dosieren zumindest die mit abrasiven Stoffen gefüllte, fliessfähige Komponente auf einer flexiblen Membran gelagert. Diese Membran begrenzt in einem Druckraum zwei Teilräume, von denen einer der Aufnahme der Komponente und ein anderer der Aufnahme eines inkompressiblen Fluids dient. Beim Fördern der Komponente von einem Vorratsbehälter in den Druckbehälter sowie beim Fördern der Komponente aus dem Druckbehälter in einen Mischer wird die Membran fortlaufend deformiert. Dadurch wird die auf der Membrane gelagerte Komponente ständig bewegt und so eine Sedimentation der abrasiven Stoffe während des Förderns und Dosierens der Komponente weitgehend vermieden.

Enthält auch die andere der mindestens zwei Komponenten abrasive Stoffe, so wird eine Sedimentation der abrasiven Stoffe in entsprechender Weise durch Lagerung der Komponente auf der Membrane eines weiteren Druckbehälters der Dosiervorrichtung vermieden. Dies gilt selbstverständlich auch für weitere in der Vorrichtung nach der Erfindung verwendete abrasive Komponenten.

Zu bevorzugen sind eine vertikale Anordnung des die abrasive Komponente aufnehmenden Teilraums über dem das inkompressible Fluid aufnehmenden Teilraum sowie eine kugelförmige Ausbildung des Druckraums, da dann eine besonders wirkungsvolle Bewegung der auf der Membrane gelagerten Komponente und eine besonders grosse Betriebssicherheit gewährleistet sind. Die Membran ist dann im wesentlichen horizontal angeordnet.

Es ist aber auch möglich, die Membran unter einem spitzen Winkel schräg zur Horizontalen oder sogar vertikal anzuordnen, da dann durch die Bewegung der Membran beim Betrieb der Vorrichtung ebenfalls eine Kraft auf die abrasive Komponente ausgeübt und daher die Sedimentation der abrasiven Füllstoffe vermieden wird.

Mit Vorteil ist der Druckbehälter von zwei gegensinnig gewölbten Schalen gebildet. Die Membran kann dann in einfacher Weise zwischen den beiden Schalen eingespannt werden. Die Membran kann dann derart ausgebildet sein, dass sie sich beim Füllen des Druckgefässes an der Wölbung einer ersten und beim Dosieren an der Wölbung der zweiten der beiden Schalen anlegt, ohne dass sie hierbei mechanisch überlastet ist. Eine Überwachung der Membran auf Überdehnung kann dann entfallen.

Darüber hinaus zeichnet sich die Vorrichtung nach der Erfindung grundsätzlich auch durch eine hohe Verfügbarkeit bei geringem Wartungsaufwand aus. Dies ist vor allem dadurch bedingt, dass die Vorrichtung in Bereichen, in denen sie abrasive oder chemisch aggressive Komponenten führt, grundsätzlich weder Förder- und Dosierpumpen noch schnellschaltende Ventile benötigt. Die Dosierung kann allein durch das inkompressible Fluid erfolgen.

Die Dosierung kann aber direkt durch Überwachung des Volumenstroms der jeweiligen Ausgangskomponente im Förderweg zwischen dem Druckbehälter und dem Mischer, etwa mittels eines Durchflussmessgerätes, kontrolliert werden. Durch Messung der Temperatur kann hierbei in einfacher Weise die exakte Masse der durchströmenden Ausgangskomponent ermittelt werden. Diese Dosierung hat gegenüber der vorgenannten Dosierung, bei der der Volumenstrom des inkompressiblen Fluids überwacht wird, den Vorteil, dass die Menge der in den Mischer geführten Komponente unmittelbar gemessen und nicht durch irgendeinen Defekt des Druckbehälters oder einer Pumpe verfälscht werden kann.

Eine besonders hohe Betriebssicherheit ist dann gegeben, wenn sowohl der Massenstrom der abrasiven Komponente als auch der Volumenstrom des Fluids überwacht werden.

Da in den beiden Teilräumen jeder der Druckbehälter keine grossen Druckunterschiede auftreten, können sehr grosse Membranen verwendet werden. Als Folge davon brauchen die in der Vorrichtung nach der Erfindung vorgesehenen Ventile in Abhängigkeit von den in die Druckbehälter geförderten Komponentenmengen nur eine sehr geringe Anzahl an Schaltungen auszuführen. Die Ventile können daher als langsam schaltende Ventile mit Doppeldichtungen ausgebildet sein, welche sich durch eine äusserst lange Betriebsbereitschaft und eine grosse Wartungsfreiheit auszeichnen. Typische Schaltzeiten betragen 0,1 s bis 1 s.

### KURZE BESCHREIBUNG DER ZEICHNUNGEN

Diese und weitere Vorteile der Erfindung werden nachfolgend anhand von Zeichnungen näher erläutert. Hierbei zeigen die beiden Figuren jeweils ein Prinzipschaltbild zweier bevorzugter Ausführungsformen der Vorrichtung nach der Erfindung.

### WEGE ZUR AUSFÜHRUNG DER ERFINDUNG

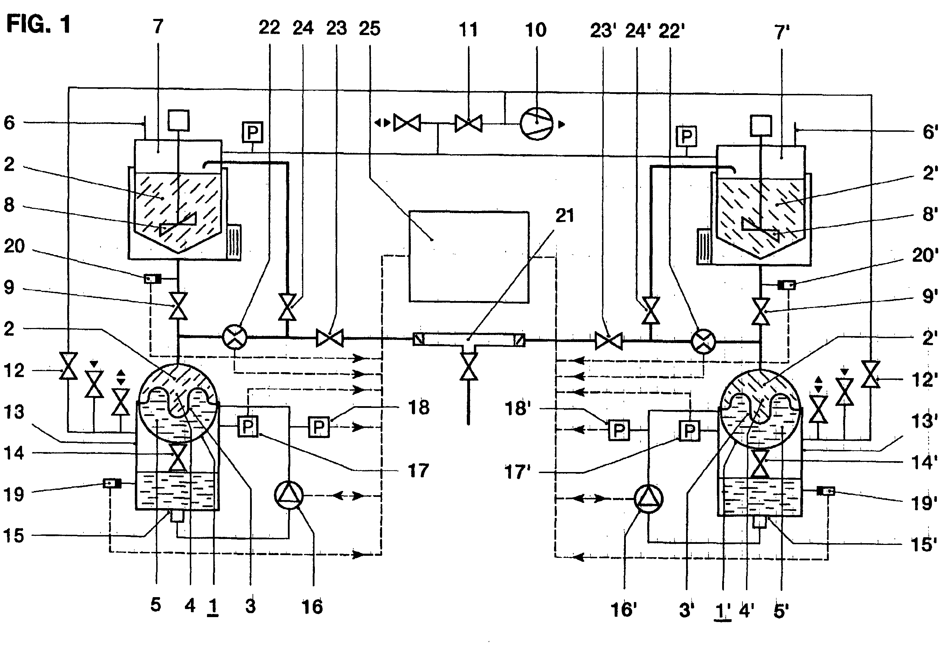

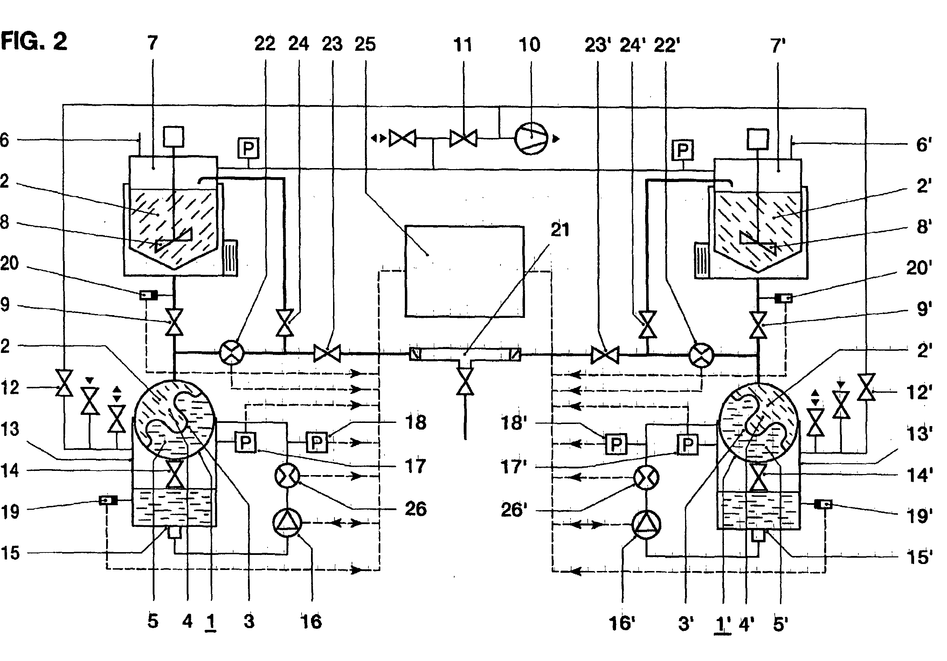

In den beiden Figuren 1 und 2 bezeichnen gleiche Bezugszeichen auch gleichwirkende Teile. Die Bezugszeichen 1 und 1' beziehen sich auf zwei druck- und vakuumfest ausgebildete Behälter zur Aufnahme jeweils einer von zwei flüssigen Ausgangskomponenten 2, 2' einer Giessharzmasse. Die Ausgangskomponente 2 kann als Bestandteile beispielsweise ein Epoxidharz und einen Füllstoff enthalten, die Ausgangskomponente 2' beispielsweise einen Härter und einen Beschleuniger. Der Druckbehälter 1 bzw. 1' ist mit Vorteil im wesentlichen kugelförmig ausgestaltet und jeweils von zwei gegensinnig gewölbten Schalen gebildet, zwischen denen jeweils eine flexiblen Membran 3 bzw. 3' eingespannt ist. Die Membran 3 bzw. 3' unterteilt den Druckraum 1 bzw. 1' jeweils in einen die Ausgangskomponente 2 bzw. 2' aufnehmenden Teilraum 4 bzw. 4' und einen mit einem inkompressiblen Fluid, wie vorzugsweise Hydrauliköl, beaufschlagbaren Teilraum 5 bzw. 5'. Die Membran 3 bzw. 3' ist jeweils derart ausgebildet, dass sie beim Füllen des Druckbehälters 1 bzw. 1' mit der Komponente 2 bzw. 2' an eine der beiden Schalen und beim Entfernen der Komponente 2 bzw. 2' während eines Dosiervorgangs an die andere der beiden Schalen, ohne sich hierbei in unzulässiger Weise zu überdehnen, angelegt werden kann.

Je eine der beiden Ausgangskomponenten 2, 2' kann als Ganzes oder in Form ihrer Bestandteile nach Öffnen eines von einem nicht dargestellten Ventils kontrollierten Einlasses 6, 6' in ein Vorratsgefäss 7 bzw. 7' eingebracht und dort - falls erforderlich - erwärmt und mit einem Rührer 8 bzw. 8' homogenisiert und entgast werden. Ein im Boden des Vorratsgefässes 7 bzw. 7' vorgesehener Auslass ist über ein Ventil 9 bzw. 9' mit dem Komponente 2 enthaltenden Teilraum 4 bzw. 4' des Druckbehälters 1 bzw. 1' verbunden. Eine Vakuumpumpe 10 ist über ein Ventil 11 mit den Vorratsgefässen 7 und 7' und über ein Ventil 12 bzw. 12' mit einem evakuierbaren Gefäss 13 bzw. 13', auf welches der Druckbehälter 1 bzw. 1' vakuumdicht aufgesetzt ist, verbindbar.

Das evakuierbare Gefäss 13 bzw. 13' ist unterhalb einer von der Verbindungsleitung zur Vakuumpumpe gebildeten Öffnung zumindest teilweise mit inkompressiblem Fluid gefüllt und umschliesst ein im Boden des Druckbehälters 1 bzw. 1' angeordnetes Ventil 14 bzw. 14'. Im Boden des evakuierbaren Behälters ist eine weitere Öffnung 15 bzw. 15' vorgesehen, welche in Wirkverbindung steht mit einem Ansaugstutzen einer das inkompressible Fluid in den Teilraum 5 bzw. 5' des Druckbehälters 1 bzw. 1' fördernden Pumpe 16 bzw. 16'. Den Druck im evakuierbaren Gefäss 13 bzw. 13' ermittelt jeweils ein Druckmessgerät 17 bzw. 17'. Mit dem Bezugszeichen 18 bzw. 18' ist ein Druckmessgerät bezeichnet, welches den Druck des inkompressiblen Fluids in der die Pumpe 16 bzw. 16' enthaltenden Verbindungsleitung zum Teilraum 5 bzw. 5' und damit auch im Druckbehälter 1 bzw. 1' ermittelt. Die Bezugszeichen 19 bzw. 19' und 20 bzw. 20' beziehen sich auf Temperaturmessgeräte, welche die Temperatur des Fluids im evakuierbaren Gefäss 13 bzw. 13' und der Komponente 2 bzw. 2' in der Verbindungsleitung vom Vorratsgefäss 7 bzw. 7 zum Druckbehälter 1 bzw. 1' und damit auch im Vorratsgefäss 7 bzw. 7' und im Druckbehälter 1 bzw. 1' angeben.

Von der Verbindungsleitung zwischen dem Ventil 9 bzw. 9' und dem Druckbehälter 1 bzw. 1' zweigt eine Verbindungsleitung zu einem aus den beiden Ausgangskomponenten 2 und 2' eine reaktive Giessharzmasse erzeugenden Mischer 21 ab. In dieser abzweigenden Verbindungsleitung sind der Reihe nach ein Durchflussmessgerät 22 bzw. 22', insbesondere eines auf der Basis eines Corioliszählers, und ein Ventil 23 bzw. 23' angeordnet. Ein weiteres Ventil 24 bzw. 24' ist in einer Verbindungsleitung zwischen einem frei von Ausgangskomponente 2 bzw. 2' gehaltenen Raum des Vorratsgefässes 7 bzw. 7' und der Verbindungsleitung zwischen dem Durchflussmessgerät 22 bzw. 22' und dem Ventil 23 bzw. 23' angeordnet.

Die Wirkungsweise dieser Vorrichtung ist wie folgt:
Bei geschlossenen Einlassen 6, 6', geschlossenen Ventilen 9, 9', 23 und 23' und geöffneten Ventilen 11, 24 und 24' werden zunächst alle Teile der Vorrichtung evakuiert, welche zur Führung der Ausgangskomponenten 2 und 2' vorgesehen sind. Danach werden die Einlasse 6, 6' geöffnet und die Vorratsgefässe 7, 7' mit den zugeordneten Ausgangskomponenten 2, 2' bzw. den Bestandteilen der zugeordneten Ausgangskomponenten 2, 2' unter Vakuum beladen. Die Einlasse 6, 6' werden sodann geschlossen und die Ausgangskomponenten 2, 2' durch Betätigen der Rührer 8, 8' homogenisiert und entgast. Austretende Gase und Dämpfe werden durch die Vakuumpumpe 10 entfernt. Durch Aufheizen der Vorratsgefässe 7, 7' werden hierbei die Ausgangskomponenten 2, 2, auf eine erwünschte vom Temperaturmessgerät 20, 20' angezeigte Verarbeitungstemperatur gebracht.

Sobald die Komponenten 2, 2' ausreichend aufbereitet sind, werden die Rührer 8, 8' abgeschaltet und wird das Ventil 11 geschlossen. Die Ventile 9, 9' werden geöffnet und die Komponenten 2, 2' unter der Wirkung von Druckgas, welches beispielsweise über die Einlasse 6, 6' in die Vorratsgefässe 7, 7' geführt werden kann, in die Teilräume 4, 4' der Druckbehälter 1, 1' gefördert. Alternativ oder zusätzlich kann durch Öffnen der Ventile 12, 12', 14, 14' in den evakuierbaren Gefässen 13, 13' und den Druckbehältern 1, 1' Unterdruck erzeugt werden und können dadurch die Membranen 3, 3' nach unten geführt werden. Hierbei gelangt Komponente 2 bzw. 2' aus dem Vorratsgefäss 7 bzw. 7' in den Teilraum 4 bzw. 4' des Druckbehälters 1 bzw. 1'. Zugleich wird inkompressibles Fluid aus dem Teilraum 5 bzw. 5' verdrängt und über das geöffnete Ventil 14 bzw. 14' in das Gefäss 13 bzw. 13' befördert, wo es bei Unterdruck wirkungsvoll entgast wird. Das gasfreie Fluid weist eine besonders hohe Inkompressibilität auf und eignet sich in vorteilhafter Weise als Dosiermittel. Die aus den Vorratsgefässen 7, 7' zugeführten Komponenten 2, 2' sind während dieser Zeit beständig auf den sich deformierenden Membranen gelagert und daher einer ständigen Bewegung unterworfen.

Nachdem die Teilräume 4 und 4' ausreichend mit Komponente 2 und 2' gefüllt sind, werden die Ventile 9, 9', 12, 12' sowie 14, 14' geschlossen und werden die Gefässe 13, 13 belüftet und gegebenenfalls auch unter Überdruck gesetzt. Bei laufender Pumpe 16 bzw. 16' wird nun Fluid aus dem Gefäss 13 bzw. 13' über die Öffnung 15 bzw. 15' abgesaugt. Zunächst wird geprüft, ob die durch den Hub und die Drehzahl der Pumpe 16 bzw. 16' bestimmte Dosierung korrekt ist. Zu diesem Zweck kann das Ventil 24 bzw. 24' geöffnet werden und wird dann Ausgangskomponente 2 bzw. 2' aus dem Druckbehälter 1 bzw. 1' über das Durchflussmessgerät 22 bzw. 22' und das geöffnete Ventil 24 bzw. 24' in das Vorratsgefäss 7 bzw. 7' geführt. Anhand der Messdaten der Durchflussmessgeräte 22 und 22' wird dann die Dosierung überprüft und durch Änderung der Drehzahl der Pumpe 16 bzw. 16' gegebenenfalls korrigiert.

Eine besonders gute Dosiergenauigkeit wird dadurch erreicht, dass die Temperatur der Ausgangskomponente 2 bzw. 2' mit dem Temperaturmessgerät 20 bzw. 20' erfasst und bei der Ermittlung der Masse der dosierten Komponentenmenge berücksichtigt wird. Beispielsweise ist bei hohen Temperaturen die Dichte der Ausgangskomponente 2 bzw. 2' gegenüber deren Dichte bei Raumtemperatur herabgesetzt. Die erwünschte Masse an Ausgangskomponente 2 bzw. 2' wird dann durch Erhöhung des Fluidvolumens erreicht. Eine Steuer- und Regelvorrichtung 25 erfasst hierbei das Ausgangssignal des Temperaturmessgerätes 20 bzw. 20' und errechnet die erforderliche Dosiermasse, stellt anhand eines Soll-Ist-Vergleichs die Abweichung zwischen dem errechneten Sollwert und dem über eine Durchflussmessung ermittelten Istwert fest und steuert die Pumpe 16 bzw. 16' entsprechend dieser Abweichung an.

Sind die Dosiermengen richtig eingestellt, so werden die Ventile 24 und 24' geschlossen und gleichzeitig die Ventile 23 und 23' geöffnet. Dosierte Komponentenmengen strömen nun in den Mischer 21 und werden dort zu einer stöchiometrisch definierten reaktiven Giessharzmasse verarbeitet. Da während des gesamten Förder- und Dosiervorganges die Ausgangskomponenten 2, 2' auf den sich ständig bewegenden Membranen 3, 3' gelagert sind, wird eine Sedimentation von abrasiven Füllstoffen in den Ausgangskomponenten mit Sicherheit vermieden.

Je nach Verwendungszweck wird die Giessharzmasse unter Beibehalt des Druckes in einem Volumen ausgehärtet. Beim Aushärten möglicherweise auftretender Schwund der im Volumen befindlichen Giessharzmasse wird kompensiert durch Giessharzmasse, welche infolge des in den Druckbehältern 1, 1' ständig wirkenden Druckes kontinuierlich nachgeführt wird. Um hierbei ein unerwünscht hohes Ansteigen des Druckes zu vermeiden, werden von den Druckmessgeräten 18, 18' ermittelte Druckwerte in der Steuer- und Regelvorrichtung erfasst und dienen einer Steuerung einer dem Mischer nachgeschalteten Durchlauf-Giessanlage. Übersteigen die Drücke vorgegebene erste Grenzwerte, so werden die Fördergeschwindigkeiten der Pumpen 16 und 16' reduziert, um mit verringerten Dosiermengen das Nachführen der Ausgangskomponenten 2, 2' zu ermöglichen. Übersteigt der Druck trotz maximal reduzierter Fördergeschwindigkeit in einem der beiden Druckbehälter 1, 1' einen zweiten Grenzwert, so werden die Pumpe 16, 16' abgeschaltet.

Die flexiblen Membranen 3, 3' brauchen sind keine grossen Druckunterschiede aufzunehmen. Daher können die Druckbehälter sehr gross bemessen sein und je nach Anwendungsfall jeweils 50 oder mehr Liter aufnehmen. Die verhältnismässig hoch beanspruchten Ventile 9, 9', 23, 23', 24 und 24' brauchen daher nur relativ wenig Schaltvorgänge auszuführen. Sie kommen daher mit Schaltzeiten von 0,1 bis 1 s problemlos aus. Die Ventile können daher als langsam schaltende Ventile mit Doppeldichtungen ausgebildet sein. Solche Ventile zeichnen sich durch eine äusserst lange Betriebsbereitschaft und eine grosse Wartungsfreiheit aus.

Ist der überwiegende Teil der Ausgangskomponenten 2, 2' aus den Teilräumen 4, 4' ausgetreten, so werden die Pumpen 16, 16' abgeschaltet und die Ventil 23, 23' geschlossen. Durch Anlegen von Unterdruck an die evakuierbaren Gefässe 13, 13' und gegebenenfalls von Überdruck an die Vorratsgefässe 7, 7' werden die Druckbehälter 1, 1' nun rasch wieder mit frischer Ausgangskomponente 2, 2' geladen.

Bei der in Fig.2 dargestellten Vorrichtung weisen im Unterschied zur Vorrichtung nach Fig.1 die Druckbehälter 1, 1' eine nahezu vertikal ausgerichtete Membran 3, 3' auf. Die Komponenten 2, 2' sind daher bei dieser Vorrichtung im wesentlichen neben den Membranen 3, 3' gelagert. Dennoch reichen die Bewegungen der Membranen aus, um eine Sedimentation von in den Komponenten 2, 2' vorgesehenen Füllstoffen weitgehend zu vermeiden. Im Unterschied zur Vorrichtung nach Fig.2 wird zugleich auch das Volumen des durch die Pumpe 16 bzw. 16' geförderten Fluidstroms gemessen und geregelt. Der Pumpe 16 bzw. 16' ist ein Durchflussmessgerät 26 bzw. 26' nachgeschaltet. Alternativ oder zusätzlich kann die Pumpe 16 bzw. 16' als Dosierpumpe ausgebildet sein.

Bei dieser Ausführungsform ist es möglich, zusätzlich oder alternativ zur Massendosierung nach der Ausführungsform gemäss Fig.1 mit dem Durchflussmessgerät 22 bzw. 22' eine indirekte Dosierung der Komponente 2 bzw. 2' zu erzielen. Hierbei werden dosierte Fluidvolumina in den Teilraum 5 bzw. 5' gepumpt, welche entsprechende Mengen an Komponente 2 bzw. 2' aus dem Druckbehälter 1 bzw. 1' verdrängen.

Wie bei der Vorrichtung gemäss Fig.1 erwähnt, können auch bei dieser Vorrichtung zunächst bei geöffneten Ventilen 24 und 24' die pro Zeiteinheit in die Teilräume 5 und 5' beförderte Massen an Ausgangskomponente 2, 2' ermittelt und durch Anpassung der Förderleistung der Pumpen 16 und 16' über die Steuer- und Regelvorrichtung 25 gegebenenfalls verändert werden. Die Durchflussmessgeräte 26 und 26' ermöglichen darüber hinaus während des gesamten Dosiervorganges eine beständige Überwachung der dosierten Komponentenmengen. Durch eine Temperaturüberwachung des Fluids mit dem Temperaturmessgerät 19 bzw. 19' können temperaturbedingte Änderungen des Förderhub der Pumpe 16 bzw. 16' korrigiert werden.

Wie erwähnt, kann die Dosierung durch Veränderung der Förderleistung der Pumpe 16 bzw. 16' erreicht werden. Ist die Pumpe 16 bzw. 16' als Dosierpumpe ausgebildet, so wird die Förderleistung und damit die Dosiermenge unmittelbar an der Pumpe ermittelt. Dies kann bei einer Dosierhübe ausführenden Kolbenpumpe oder bei einer kontinuierlich arbeitenden Zahnradpumpe in besonders vorteilhafter Weise durch einen den Hub und/oder die Drehzahl der Dosierpumpe detektierenden Sensor, wie insbesondere einen Inkrementalgeber, erfasst und durch die Steuer- und Regelvorrichtung 25 gesteuert werden. Zusätzlich kontrolliert das Durchflussmessgerät 26 bzw. 26', etwa durch Zählen, das Volumen des von der Pumpe 16 bzw. 16' dosierten Fluids. Ist die Pumpe 16 bzw. 16' keine Dosierpumpe, so ermittelt das Durchflussmessgerät 26 bzw. 26' das Volumen des in den Teilraum 5 bzw. 5' beförderten Fluids. Über die Steuer- und Regelvorrichtung 25 kann auch in diesem Fall die Menge des strömenden Fluids dosiert werden.

Die Druckmessgeräte 18, 18' erkennen möglicherweise auftretende Leckverluste der Druckgefässe 1, 1'. Eine den Druckabfall pro Zeiteinheit des Druckgefässes 1 bzw. 1' charakterisierende Kennlinie ist in der Steuer- und Regelvorrichtung 25 gespeichert. Nach Vergleich mit dem vom zugeordneten Druckmessgerät 18 bzw. 18' ermittelten Druckwert kann durch geeignete Veränderung der Förderleistung der Pumpe 16 bzw. 16' der Leckverlust gegebenenfalls kompensiert werden.

### BEZUGSZEICHENLISTE

- 1, 1': Druckbehälter
- 2, 2': Ausgangskomponenten
- 3, 3': Membranen
- 4, 4', 5, 5': Teilräume
- 6, 6': Einlasse
- 7, 7': Vorratsgefässe
- 8, 8': Rührer
- 9, 9': Ventile
- 10: Vakuumpumpe
- 11, 11', 12, 12': Ventile
- 13, 13': evakuierbare Gefässe
- 14, 14': Ventile
- 15, 15': Öffnungen
- 16, 16': Pumpen
- 17, 17', 18, 18': Druckmessgeräte
- 19, 19', 20, 20': Temperaturmessgeräte
- 21: Mischer
- 22, 22': Durchflussmessgeräte
- 23, 23', 24, 24': Ventile
- 25: Steuer- und Regelvorrichtung
- 26, 26': Durchflussmessgeräte

## Patentansprüche

1. Vorrichtung zum Fördern dosierter Mengen mindestens zweier fliessfähiger Komponenten (2, 2'), von denen mindestens eine abrasive Stoffe enthält, in einen der Bildung einer reaktiven Masse aus den dosierten Mengen der Komponenten dienenden Mischer (21), mit mindestens zwei jeweils mindestens einen Druckbehälter (1, 1') aufweisenden Dosiervorrichtungen, wobei die Druckbehälter jeweils durch eine flexible Membrane (3, 3') unterteilt sind in einen jeweils eine der Ausgangskomponenten (2, 2') aufnehmenden ersten Teilraum (4, 4') und einen mit inkompressiblem Fluid beaufschlagbaren zweiten Teilraum (5, 5'), und wobei der die abrasive Komponente aufnehmende Druckbehälter (1, 1') derart ausgebildet und angeordnet ist, dass der überwiegende Teil der in dessen ersten Teilraum (4, 4') geführten abrasiven Komponente auf oder neben der flexiblen Membran (3, 3') gelagert ist, **dadurch gekennzeichnet, dass** der zweite Teilraum (5, 5') des Druckbehälters (1, 1') mit einem evakuierbaren Gefäss (13, 13') verbindbar ist, dass das evakuierbare Gefäss (13, 13') eine mit einer Vakuumpumpe (10) verbindbare erste Öffnung aufweist und unterhalb der ersten Öffnung zumindest teilweise mit dem inkompressiblen Fluid gefüllt ist, und dass im Boden des evakuierbaren Behälters (13, 13') eine zweite Öffnung 15, 15') vorgesehen ist, welche in Wirkverbindung steht mit einem Ansaugstutzen einer das inkompressible Fluid in den zweiten Teilraum (5, 5') des Druckbehälters (1, 1') fördernden Pumpe (16, 16').

2. Vorrichtung nach Anspruch 1, **dadurch gekennzeichnet, dass** das evakuierbare Gefäss (13, 13') mit einem Druckmessgerät (17, 17') zur Ermittlung eines beim Dosieren im Gefäss (13, 13') herrschenden Überdrucks verbunden ist.

3. Vorrichtung nach einem der Ansprüche 1 oder 2, **dadurch gekennzeichnet, dass** der Druckbehälter (1, 1') auf dem evakuierbaren Gefäss (13, 13') aufgesetzt ist.

4. Vorrichtung nach Anspruch 3, **dadurch gekennzeichnet, dass** das evakuierbare Gefäss (13, 13') ein im Boden des Druckbehälters (1, 1') angeordnetes Ventil (14, 14') umschliesst.

5. Vorrichtung nach einem der Ansprüche 1 bis 4, **dadurch gekennzeichnet, dass** im Förderweg der Komponente (2, 2') zwischen dem ersten Teilraum (4, 4') des Druckbehälters (1, 1') und dem Mischer (16) ein Mengendurchflussmessgerät (22, 22') angeordnet ist.

6. Vorrichtung nach Anspruch 5, **dadurch gekennzeichnet, dass** im Förderweg der Komponente (2, 2') ein die Temperatur der Komponente (2, 2') ermittelndes erstes Temperaturmessgerät (20, 20') angeordnet ist.

7. Vorrichtung nach einem der Ansprüche 1 bis 6, **dadurch gekennzeichnet, dass** der Pumpe (16, 16') ein Durchflussmessgerät (26, 26') nachgeschaltet ist.

8. Vorrichtung nach einem der Ansprüche 1 bis 7, **dadurch gekennzeichnet, dass** die Pumpe (16, 16') als Dosierpumpe ausgebildet ist.

9. Vorrichtung nach einem der Ansprüche 1 bis 8, **dadurch gekennzeichnet, dass** am zweiten Teilraum (5, 5') des Druckbehälters (1, 1') ein Druckmessgerät (18, 18') angeordnet ist.

10. Vorrichtung nach einem der Ansprüche 6 bis 9, **dadurch gekennzeichnet, dass** am evakuierbaren Behälter (13, 13') ein zweites Temperaturmessgerät (19, 19') angeordnet ist.

11. Vorrichtung nach einem der Ansprüche 1 bis 10, **dadurch gekennzeichnet, dass** im Förderweg der Komponente (2, 2') vorgesehene Ventile (9, 9', 23, 23', 24, 24') Schaltzeiten aufweisen, welche zwischen von 0,1 s und 1 s liegen.

## Claims

1. Device for conveying metered quantities of at least two free-flowing components (2, 2'), at least one of which contains abrasive substances, into a mixer (21) which serves to form a reactive compound from the metered quantities of the components, having at least two metering devices which each have at least one pressure vessel (1, 1'), the pressure vessels each being subdivided by a flexible diaphragm (3, 3') into a first part-volume (4, 4'), which in each case receives one of the starting components (2, 2'), and a second part-volume (5, 5') which can be acted upon by incompressible fluid, and the pressure vessel (1, 1') which receives the abrasive component being designed and arranged in such a way that the major portion of the abrasive component fed into its first part-volume (4, 4') rests on or near to the flexible diaphragm (3, 3'), **characterized in that** the second part-volume (5, 5') of the pressure vessel (1, 1') can be connected to an evacuable vessel (13, 13'), **in that** the evacuable vessel (13, 13') has a first opening, which can be connected to a vacuum pump (10), and is at least partially filled with the incompressible fluid below the first opening, and **in that** a second opening (15, 15') is provided in the bottom of the evacuable vessel (13, 13'), which second opening is operatively connected to an intake nozzle of a pump (16, 16') which conveys the incompressible fluid into the second part-volume (5, 5') of the pressure vessel (1, 1').

2. Device according to claim 1, **characterized in that** the evacuable vessel (13, 13') is connected to a pressure gauge (17, 17') to determine any overpressure prevailing in the vessel (13, 13') during metering.

3. Device according to either of Claims 1 and 2, **characterized in that** the pressure vessel (1, 1') is fitted onto the evacuable vessel (13, 13').

4. Device according to Claim 3, **characterized in that** the evacuable vessel (13, 13') surrounds a valve (14, 14') arranged in the bottom of the pressure vessel (1, 1').

5. Device according to one of Claims 1 to 4, **characterized in that** a flow meter (22, 22') is arranged in the conveying path of the component (2, 2') between the first part-volume (4, 4') of the pressure vessel (1, 1') and the mixer (16).

6. Device according to Claim 5, **characterized in that** a first temperature gauge (20, 20') which determines the temperature of the component (2, 2') is arranged in the conveying path of the component (2, 2').

7. Device according to one of Claims 1 to 6, **characterized in that** a flow meter (26, 26') is arranged downstream of the pump (16, 16').

8. Device according to one of claims 1 to 7, **characterized in that** the pump (16, 16') is designed as a metering pump.

9. The device according to one of Claims 1 to 8, **characterized in that** a pressure gauge (18, 18') is arranged on the second part-volume (5, 5') of the pressure vessel (1, 1').

10. Device according to one of Claims 6 to 9, **characterized in that** a second temperature gauge (19, 19') is arranged on the evacuable vessel (13, 13').

11. Device according to one of Claims 1 to 10, **characterized in that** valves (9, 9', 23, 23', 24, 24') provided in the conveying path of the component (2, 2') have switching times which lie between 0.1 s and 1 s.

## Revendications

1. Dispositif pour refouler des quantités dosées d'au moins deux composants fluides (2, 2'), dont l'un au moins contient une substance abrasive, dans un mélangeur (21) servant à la formation d'une masse réactive formée des quantités dosées des composants, avec au moins deux dispositifs de dosage présentant à chaque fois au moins un réservoir sous pression (1, 1'), les réservoirs sous pression étant à chaque fois divisés par une membrane flexible (3, 3') en un premier espace partiel (4, 4') recevant à chaque fois l'un des composants de départ (2, 2') et en un second espace partiel (5, 5') qui peut être alimenté en fluide incompressible, et le réservoir sous pression (1, 1') recevant le composant abrasif étant formé et disposé de manière que la partie prépondérante du composant abrasif amené dans son premier espace partiel (4, 4') soit entreposée au-dessus ou à côté de la membrane flexible (3, 3'), **caractérisé en ce que** le second espace partiel (5, 5') du réservoir sous pression (1, 1') peut être raccordé à un récipient pouvant être mis sous vide (13, 13'), **en ce que** le récipient pouvant être mis sous vide (13, 13') présente une première ouverture qui peut être raccordée à une pompe à vide (10) et est rempli, en dessous de la première ouverture, au moins en partie du fluide incompressible, et **en ce que**, dans le fond du récipient pouvant être mis sous vide (13, 13'), il est prévu une seconde ouverture (15, 15'), qui est en liaison de fonctionnement avec une tubulure d'aspiration d'une pompe (16, 16') refoulant le fluide incompressible dans le second espace partiel (5, 5') du réservoir sous pression (1, 1').

2. Dispositif selon la revendication 1, **caractérisé en ce que** le récipient pouvant être mis sous vide (13, 13') est raccordé à un appareil de mesure de pression (17, 17') pour déterminer une surpression régnant lors du dosage dans le récipient (13, 13').

3. Dispositif selon l'une quelconque des revendications 1 et 2, **caractérisé en ce que** le récipient sous pression (1, 1') est posé sur le récipient pouvant être mis sous vide (13, 13').

4. Dispositif selon la revendication 3, **caractérisé en ce que** le récipient pouvant être mis sous vide (13, 13') entoure une soupape (14, 14') disposée dans le fond du réservoir sous pression (1, 1').

5. Dispositif selon l'une quelconque des revendications 1 à 4, **caractérisé en ce que**, dans le trajet de refoulement du composant (2, 2'), entre le premier espace partiel (4, 4') du réservoir sous pression (1, 1') et le mélangeur (16) est disposé un appareil de mesure de débit massique (22, 22').

6. Dispositif selon la revendication 5, **caractérisé en ce que**, dans le trajet de refoulement du composant (2, 2'), est disposé un premier appareil de mesure de température (20, 20') déterminant la température du composant (2, 2').

7. Dispositif selon l'une quelconque des revendications 1 à 6, **caractérisé en ce qu'**un appareil de mesure de débit (26, 26') est raccordé en aval de la pompe (16, 16').

8. Dispositif selon l'une quelconque des revendications 1 à 7, **caractérisé en ce que** la pompe (16, 16') se présente sous la forme d'une pompe de dosage.

9. Dispositif selon l'une quelconque des revendications 1 à 8, **caractérisé en ce qu'**un appareil de mesure de pression (18, 18') est disposé dans le second espace partiel (5, 5') du réservoir sous pression (1, 1').

10. Dispositif selon l'une quelconque des revendications 6 à 9, **caractérisé en ce qu'**un second appareil de mesure de température (19, 19') est disposé sur le réservoir pouvant être mis sous vide (13, 13').

11. Dispositif selon l'une quelconque des revendications 1 à 10, **caractérisé en ce que** les soupapes (9, 9', 23, 23', 24, 24') prévues dans le trajet de refoulement du composant (2, 2') présentent des temps de commutation qui se situent entre 0,1 seconde et 1 seconde.
